# EUROPÄISCHE PATENTSCHRIFT

(11) **EP 2 049 367 B1**
(45) Veröffentlichungstag und Bekanntmachung des Hinweises auf die Patenterteilung: **31.03.2010**
(21) Anmeldenummer: 07765123.0
(22) Anmeldetag: 07.07.2007
(51) Int. Cl.: B60R 11/04, F16M 11/00

(54) **VORRICHTUNG ZUM HALTEN EINER KAMERA AN EINEM TRÄGER**
DEVICE FOR SECURING A CAMERA TO A CARRIER
DISPOSITIF POUR MAINTENIR UNE CAMERA SUR UN SUPPORT

(30) Priorität: 02.08.2006 DE 102006035991
(43) Veröffentlichungstag der Anmeldung: 22.04.2009
(73) Patentinhaber: A. Raymond et Cie., 38000 Grenoble (FR)
(72) Erfinder: HÄNSEL, Mathias, 79595 Rümmingen (DE)
(74) Vertreter: Rüttgers, Joachim
(86) Internationale Anmeldenummer: PCT/EP2007/006041
(87) Internationale Veröffentlichungsnummer: WO 2008/014870

(56) Entgegenhaltungen:
- DE-A1- 10 237 606
- DE-B3-102004 032 749
- US-B1- 6 587 152

## Beschreibung

Die Erfindung betrifft eine Vorrichtung zum Halten einer Kamera an einem Träger.

Aus DE 10 2004 032 749 B3 ist eine Vorrichtung zum Befestigen eines Regensensors an einem Träger bekannt, die über ein Bodenteil und über ein mit dem Bodenteil verbindbares Halteteil verfügt. Der Regensensor ist zwischen dem Bodenteil und dem Halteteil angeordnet. US 6587152 B1 ist eine Vorrichtung zum Halten einer Kamera nach dem Oberbegriff des Anspruchs 1.

Der Erfindung liegt die Aufgabe zugrunde, eine verhältnismäßig günstig herzustellende Vorrichtung zum Halten einer Kamera an einem Träger anzugeben, mit der die Kamera sehr einfach und dennoch genau positionierbar ist.

Diese Aufgabe wird bei einer Vorrichtung zum Halten einer Kamera an einem Träger mit den Merkmalen des Patentanspruches 1 gelöst.

Dadurch, dass die erfindungsgemäße Vorrichtung ein Bodenteil aufweist, das einstückig aus Blech als Stanz-Biege-Teil ausgebildet ist und sich in Längsrichtung erstreckende Führungsstege aufweist, lässt sich das für jeden Führungssteg eine Stegaufnahme aufweisende Halteteil sehr einfach auf das Bodenteil aufschieben. Durch das Zusammenwirken der Federzungen und der Zungenaufnahmen in der Fixierstellung ist das Halteteil und damit eine mit dem Halteteil verbundene Kamera genau positioniert.

Weitere zweckmäßige Ausgestaltungen der Erfindung ergeben sich aus den Unteransprüchen.

Nachfolgend wird ein zweckmäßiges Ausführungsbeispiel der Erfindung sowie Vorteile der erfindungsgemäßen Vorrichtung mit Bezug auf die Figuren der Zeichnung näher erläutert. Es zeigen:
- Fig. 1: in einer perspektivischen Ansicht ein Ausführungsbeispiel einer erfindungsgemäßen Vorrichtung mit Blick auf die einem Träger zugewandte Unterseite,
- Fig. 2: in einer perspektivischen Ansicht ein Ausführungsbeispiel gemäß Fig. 1 mit Blick auf die einem Träger abgewandte Oberseite,
- Fig. 3: in einer perspektivischen Ansicht das Bodenteil des Ausführungsbeispiels gemäß Fig. 1 und Fig. 2 mit Blick auf die dem Halteteil zugewandte Seite und
- Fig. 4: in einer perspektivischen Ansicht das Halteteil bei dem Ausführungsbeispiel gemäß Fig. 1 und Fig. 2 mit Blick auf die dem Bodenteil abgewandte Seite.

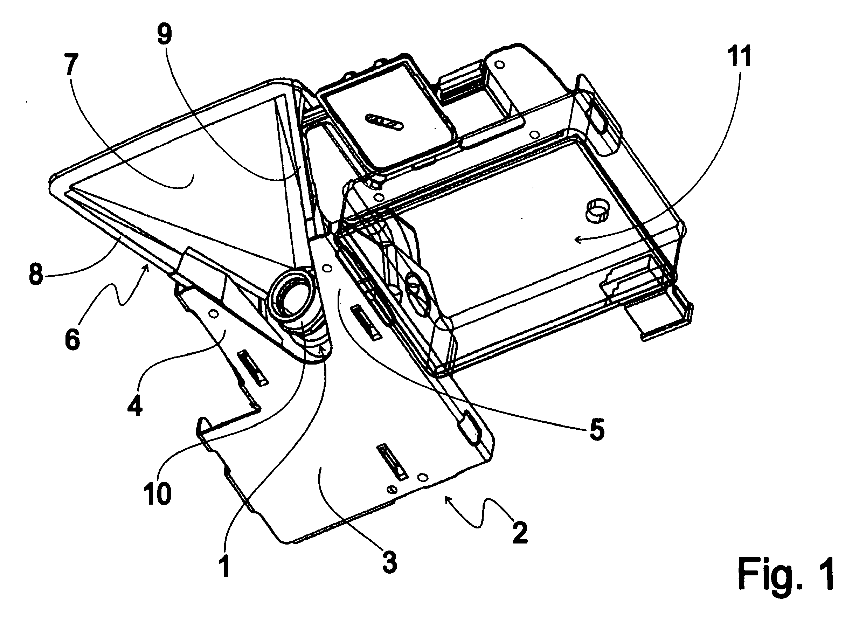

Fig. 1 zeigt in einer perspektivischen Ansicht ein Ausführungsbeispiel einer erfindungsgemäßen Vorrichtung zum Halten einer Kamera 1 an einem in Fig. 1 nicht dargestellten, insbesondere in Gestalt einer Scheibe eines Kraftfahrzeugs ausgebildeten Träger. Das Ausführungsbeispiel gemäß Fig. 1 verfügt über ein Bodenteil 2, das einstückig aus Blech als Stanz-Biege-Teil ausgebildet ist. Das Bodenteil 2 verfügt über eine flache Bodenplatte 3, die an einem Ende mit sich in Längsrichtung des Bodenteiles 2 erstreckenden Randzungen 4, 5 ausgebildet ist. Die Randzungen 4, 5 erstrecken sich von ihren Anbindungsenden schwalbenschwanzartig mit einem in Richtung der freien Enden zunehmenden Abstand, so dass zwischen den Randzungen 4, 5 eine V-artige Sichtfeldausnehmung ausgebildet ist.

Weiterhin lässt sich Fig. 1 entnehmen, dass das in Fig. 1 dargestellte Ausführungsbeispiel einer erfindungsgemäßen Vorrichtung über ein aus Kunststoff hergestelltes Halteteil 6 verfügt, das mit dem Bodenteil 2 verbunden und dazu eingerichtet ist, die Kamera 1 in einer weiter unten näher erläuterten Art und Weise zu halten. Aus Fig. 1 lässt sich erkennen, dass das Halteteil 6 über eine Schirmabdeckung 7 verfügt, die die zwischen den Randzungen 4, 5 ausgebildete Sichtfeldausnehmung überdeckt und sich in Verlängerung der divergierenden Innenkanten der Randzungen 4, 5 über das Bodenteil 2 hinaus erstreckt sowie in ihrer Bauhöhe von der Kamera 1 wegweisend abnimmt. Die Schirmabdeckung 7 verfügt über seitliche Randwände 8, 9, die das Sichtfeld eines Objektives 10 der Kamera 1, das im Bereich der aufeinander zu laufenden Enden der Randzungen 4, 5 angeordnet ist, auch seitlich begrenzt.

Schließlich ist in Fig. 1 dargestellt, dass bei diesem Ausführungsbeispiel an das Bodenteil 2 eine Sensoranordnung 11 angefügt ist.

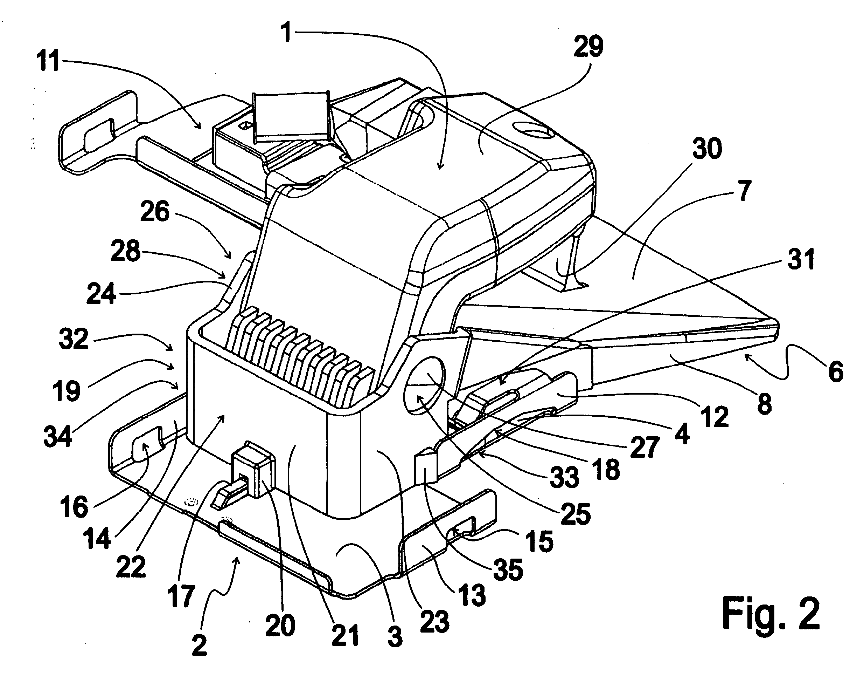

Fig. 2 zeigt in einer perspektivischen Ansicht das Ausführungsbeispiel gemäß Fig. 1 mit Blick auf die dem auch in Fig. 2 nicht dargestellten Träger abgewandte Seite. Fig. 2 lässt sich entnehmen, dass das Bodenteil 2 mit einer sich parallel zur Längsrichtung erstreckende Anzahl von Randstegen, nämlich auf einer Längsseite mit einem inneren Randsteg 12, mit einem gegenüber dem inneren Randsteg 12 seitlich nach außen versetzten äußeren Randsteg 13 und auf der gegenüberliegenden Längsseite mit einem durchgehenden langen Randsteg 14 ausgebildet ist, die sich jeweils in Längsrichtung des Bodenteiles 2 erstrecken und rechtwinklig zu der Bodenplatte 3 ausgerichtet sind. Im Übergangsbereich zwischen der Bodenplatte 3 und dem äußeren Randsteg 13 sowie dem langen Randsteg 14 sind Eingriffsausnehmungen 15, 16 eingebracht, in die eine in Fig. 2 nicht dargestellte Systemabdeckung einrastbar ist und die zum Greifen während des Transports des Bodenteiles 2 dienen.

In die Bodenplatte 3 sind eine Anzahl von sich in Längsrichtung des Bodenteiles 2 erstreckenden Führungsstegen 17, 18, 19 als brückenartige Erhebungen eingestanzt, um das mit zu den Führungsstegen 17, 18, 19 komplementär ausgebildeten Stegaufnahmen ausgestattete Halteteil 6 beim Aufschieben auf das Bodenteil 2 zu führen. Eine Stegaufnahme ist, wie aus Fig. 2 ersichtlich, als Stegaufnahmesockel 20 ausgebildet, der sich von einer Stirnwand 21 eines Aufnahmekäfigs 22 des Halteteiles 6 nach außen erstreckt.

Der Aufnahmekäfig 22 verfügt weiterhin über zwei im Wesentlichen rechtwinklig zu der Stirnwand 21 ausgerichtete Seitenwände 23, 24, die sich auf die dem Stegaufnahmesockel 22 abgewandte Seite der Stirnwand 21 in Richtung der Schirmabdeckung 7 erstrecken. In den Seitenwänden 23, 24 ist jeweils eine runde Einrastausnehmung 25, 26 eingebracht, in die beidseitig einer Mitteldiagonalen angeschrägte Einrastköpfe 27, 28 eines Kameragehäuses 29 der Kamera 1 einrastbar sind. Dadurch ist das im Wesentlichen L-artig ausgebildete Kameragehäuse 29 mit einem Schenkel von dem Aufnahmekäfig 22 umschlossen und schwenkbar an dem Halteteil 6 angebracht, wobei der andere Schenkel mit einem an der Schirmabdeckung 7 ausgebildeten Raststeg 30 verrastet ist.

Schließlich lässt sich Fig. 2 entnehmen, dass an dem inneren Randsteg 12 an der der Bodenplatte 3 abgewandten Oberseite sowie an der der Bodenplatte 3 abgewandten Oberseite des langen Randsteges 14 jeweils eine Federzunge 31, 32 angeformt ist, um in der in Fig. 2 dargestellten Fixierstellung jeweils mit einer an dem Halteteil 6 ausgebildeten Zungenaufnahme 33, 34 in Eingriff zu kommen, sobald eine an dem Aufnahmekäfig 22 ausgebildete Anschlagnase 35 mit der den Randzungen 4, 5 abgewandten Stirnseite des inneren Randsteges 12 in Anschlag kommt. Dadurch ist das Halteteil 6 sowie dementsprechend auch die Kamera 1 sicher und zuverlässig genau positioniert.

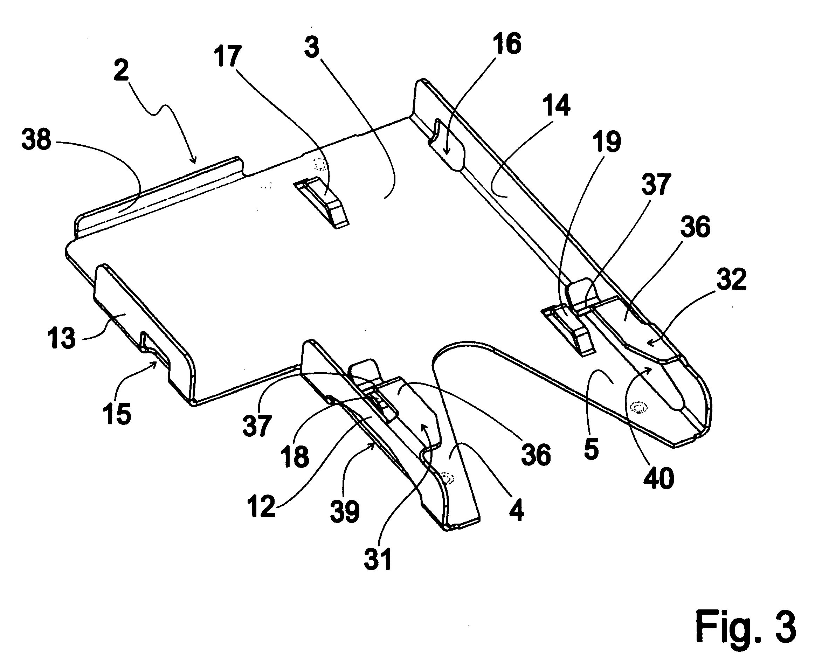

Fig. 3 zeigt in einer perspektivischen Ansicht das Bodenteil 2 gemäß dem Ausführungsbeispiel von Fig. 1 und Fig. 2 mit Blick auf die dem Halteteil 6 zugewandte Seite. Aus Fig. 3 ist ersichtlich, dass die bei diesem Ausführungsbeispiel drei Führungsstege 17, 18, 19 sich in Längsrichtung des Bodenteils 2 erstrecken sowie quer zu dieser Längsrichtung versetzt angeordnet sind, um ein möglichst gutes Fuhrungsverhalten zu erzielen. Weiterhin lässt sich Fig. 3 entnehmen, dass die Federzungen 31, 32 sich jeweils mit einem Zungenabschnitt 36 innenseitig des inneren Randsteges 12 beziehungsweise des langen Randsteges 14 erstrecken und aufgrund eines Freischnittes zu dem inneren Randsteg 12 beziehungsweise dem langen Randsteg 14 federnd elastisch ausgebildet sind. An den den freien Enden der Randzungen 4, 5 abgewandten freien Enden der Zungenabschnitte 36 ist durch winkliges Abkanten jeweils eine Eingriffserhebung 37 ausgebildet, die sich in Richtung der Bodenplatte 3 erstreckt.

Schließlich sei angemerkt, dass zum Erhöhen der Verwindungssteifigkeit der Bodenplatte 3 an ihrer den Randzungen 4, 5 gegenüberliegenden Randseite ein Stirnsteg 38 ausgebildet ist. Im Übergangsbereich zwischen dem inneren Randsteg 12 sowie dem langen Randsteg 14 und der Bodenplatte 3 sind Längsausnehmungen 39, 40 ausgebildet, um beispielsweise einen Befestigungsbereich für die Sensoranordnung 11 zu schaffen.

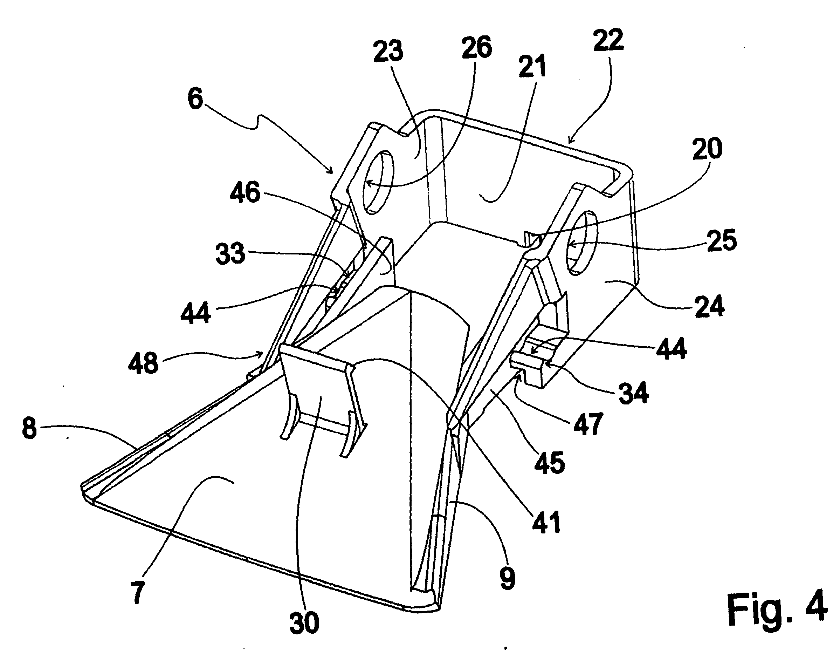

Fig. 4 zeigt das Halteteil 6 gemäß dem anhand Fig. 1 und Fig. 2 erläuterten Ausführungsbeispiel mit Blick auf die dem Bodenteil 2 abgewandte Seite. Fig. 4 lässt sich entnehmen, dass zum Fixieren des Kameragehäuses 29 der Raststeg 30 mit einer sich in Richtung des Aufnahmekäfigs 22 erstreckenden Stegnase 41 ausgebildet ist, mit der der entsprechende Schenkel des Kameragehäuses 29 verrastbar ist.

Weiterhin lässt sich Fig. 4 entnehmen, dass an der der Schirmabdeckung 7 zugewandten Seite des Aufnahmekäfigs 22 die Zungenaufnahmen 33, 34 angesetzt sind, die an ihren dem Bodenteil 2 abgewandten Seiten mit komplementär zu den Eingriffserhebungen 37 ausgebildeten Eingriffsvertiefungen 44 ausgestattet sind. Zwischen den Zungenaufnahmen 33, 34 und der Schirmabdeckung 7 mit dem Aufnahmekäfig 22 verbindenden Verbindungsstegen 45, 46 sind als weitere Stegaufnahmen Stegaufnahmeschlitze 47, 48 ausgebildet, die mit den randseitig angeordneten Führungsstegen 18, 19 in Eingriff kommen.

## Patentansprüche

1. Vorrichtung zum Halten einer Kamera (1) an einem Träger mit einem Bodenteil (2) und mit einem mit dem Bodenteil (2) verbindbaren Halteteil (6), das zum Halten der Kamera (1) eingerichtet ist, **dadurch gekennzeichnet, dass** das Bodenteil (2) einstückig aus Blech als Stanz-Biege-Teil ausgebildet ist und eine Anzahl von sich in einer Längsrichtung des Bodenteiles (2) erstreckenden Führungsstegen (17, 18, 19) aufweist sowie mit in einem Abstand quer zu der Längsrichtung angeordneten Federzungen (31, 32) ausgebildet ist und wobei das Halteteil (6) für jeden Führungssteg (17, 18, 19) eine Stegaufnahme (20, 47, 48) aufweist, so dass das Halteteil (6) in Längsrichtung geführt gegenüber dem Bodenteil (2) verschiebbar ist, sowie für jede Federzunge (31, 32) mit einer Zungenaufnahme (33, 34) ausgebildet ist, mit denen die Federzungen (31, 32) in einer Fixierstellung des Halteteils (6) in Bezug auf das Bodenteil (2) in Eingriff kommen und das Halteteil (6) gegenüber einer Verschiebung in Längsrichtung in Bezug auf das Bodenteil (2) fixieren.

2. Vorrichtung nach Anspruch 1, **dadurch gekennzeichnet, dass** das Bodenteil (2) eine flache Bodenplatte (3) aufweist, in die die Führungsstege (17, 18, 19) als sich in Richtung des Halteteils (6) erstreckende Erhebungen eingestanzt sind.

3. Vorrichtung nach Anspruch 2, **dadurch gekennzeichnet, dass** von der Bodenplatte (3) rechtwinklig abstehende Randstege (12, 13, 14) abgekantet sind.

4. Vorrichtung nach Anspruch 3, **dadurch gekennzeichnet, dass** die Federzungen (31, 32) an einander gegenüberliegenden Randstegen (12, 14) an der Bodenplatte (3) abgewandten Stirnseiten angeformt sind.

5. Vorrichtung nach einem der Ansprüche 1 bis 4, **dadurch gekennzeichnet, dass** die Federzungen (31, 32) jeweils mit einer Eingriffserhebung (37) ausgebildet sind.

6. Vorrichtung nach Anspruch 5, **dadurch gekennzeichnet, dass** das Halteteil (6) mit komplementär zu den Eingriffserhebungen (37) ausgebildeten Eingriffsvertiefungen (44) ausgebildet ist.

7. Vorrichtung nach einem der Ansprüche 1 bis 6, **dadurch gekennzeichnet, dass** das Halteteil (6) eine Anschlagnase (35) aufweist, die in der Fixierstellung an einer stirnseitigen Randkante eines Randsteges (12) anliegt.

8. Vorrichtung nach einem der Ansprüche 1 bis 7, **dadurch gekennzeichnet, dass** das Halteteil (6) einen Aufnahmekäfig (22) mit Seitenwänden (23, 24) aufweist, in die Einrastausnehmungen (25, 26) zur Aufnahme von an einem Kameragehäuse (29) der Kamera (1) ausgebildeten Einrastköpfen (27, 28) eingebracht sind.

9. Vorrichtung nach Anspruch 3 und Anspruch 8, **dadurch gekennzeichnet, dass** an dem Aufnahmekäfig (22) eine Anschlagnase (35) ausgebildet ist, die in der Fixierstellung an einem Randsteg (12, 13, 14) anliegt.

## Claims

1. Device for holding a camera (1) on a support comprising a base part (2) and comprising a retaining part (6) which can be connected to the base part (2) and is set up for holding the camera (1), **characterized in that** the base part (2) is formed in an integral manner from sheet metal as a stamped and bent part and has a number of guide fins (17, 18, 19) extending in the longitudinal direction of the base part (2) and is formed with spring tongues (31, 32) arranged a distance apart transversely to the longitudinal direction, the retaining part (6) having a fin receptacle (20, 47, 48) for each guide fin (17, 18, 19), so that the retaining part (6) is displaceable with guidance relative to the base part (2), and, for each spring tongue (31, 32), being formed with a tongue receptacle (33, 34) with which the spring tongues (31, 32) engage in a fixing position of the retaining part (6) relative to the base part (2) and fix the retaining part (6) relative to the base part (2) with respect to displacement in the longitudinal direction.

2. Device according to Claim 1, **characterized in that** the base part (2) has a flat base plate (3) into which the guide fins (17, 18, 19) are stamped as elevations extending in the direction of the retaining part (6).

3. Device according to Claim 2, **characterized in that** edge fins (12, 13, 14) projecting at right angles are produced by bending the base plate (3).

4. Device according to Claim 3, **characterized in that** the spring tongues (31, 32) are formed on opposite edge fins (12, 14) on sides facing away from the base plate (3).

5. Device according to any of Claims 1 to 4, **characterized in that** the spring tongues (31, 32) are formed in each case with an engagement elevation (37).

6. Device according to Claim 5, **characterized in that** the retaining part (6) is formed with engagement indentations (44) complementary to the engagement elevations (37).

7. Device according to any of Claims 1 to 6, **characterized in that** the retaining part (6) has a stop lug (35) which rests against a side edge of an edge fin (12) in the fixing position.

8. Device according to any of Claims 1 to 7, **characterized in that** the retaining part (6) has a receiving cage (22) with side walls (23, 24) into which snap-in recesses (25, 26) are introduced for receiving snap-in heads (27, 28) formed on a camera housing (29) of the camera (1).

9. Device according to Claim 3 and Claim 8, **characterized in that** a stop lug (25) which rests against an edge fin (12, 13, 14) in the fixing position is formed on the receiving cage (22).

## Revendications

1. Dispositif de maintien en position d'une caméra (1) sur un support, comprenant un élément d'assise (2) et comprenant un élément de retenue (6) destiné à être raccordé à l'élément d'assise (2), qui est agencé pour maintenir la caméra (1) en position, **caractérisé en ce que** l'élément d'assise (2) se présente sous la forme d'un élément monobloc réalisé par pliage et découpage à la presse à partir d'un flan en tôle et **en ce qu'**il comporte un certain nombre de plots de guidage d'introduction (17, 18, 19) qui s'étendent dans la direction longitudinale de l'élément d'assise (2) ainsi que des languettes élastiques (31, 32) disposées, à une certaine distance l'une de l'autre, transversalement par rapport au sens longitudinal, et dans lequel l'élément de retenue (6) comporte, pour chaque plot de guidage d'introduction (17, 18, 19), un logement de réception de plot (20, 47, 48), ce qui fait que l'élément de retenue (6) peut être déplacé de manière guidée dans le sens longitudinal par rapport à l'élément d'assise (2), et comporte également, pour chaque languette élastique (31, 32), un logement de réception de languette (33, 34), avec lesquels les languettes élastiques (31, 32) viennent en prise d'encastrement dans une position d'immobilisation en position de l'élément de retenue (6) par rapport à l'élément d'assise (2) et empêchent l'élément de retenue (6) de se déplacer dans le sens longitudinal par rapport à l'élément d'assise (2).

2. Dispositif selon la revendication 1, **caractérisé en ce que** l'élément d'assise (2) consiste en une plaque d'assise plate (3), dans laquelle les plots de guidage d'introduction (17, 18, 19) sont réalisés par découpage à la presse sous la forme de protubérances s'étendant dans la direction de l'élément de retenue (6).

3. Dispositif selon la revendication 2, **caractérisé en ce que** des barrettes de rive (12, 13, 14) formant saillie selon une disposition en angle droit sont réalisées par pliage à la presse dans la plaque d'assise (3).

4. Dispositif selon la revendication 3, **caractérisé en ce que** les languettes élastiques (31, 32) sont réalisées attenantes par formage à des barrettes de rive (12, 14) se faisant respectivement face au niveau de côtés antérieurs allant en s'écartant de la plaque d'assise (3).

5. Dispositif selon l'une des revendications 1 à 4, **caractérisé en ce que** les languettes élastiques (31, 32) sont respectivement munies d'une protubérance de mise en prise d'encastrement (37).

6. Dispositif selon la revendication 5, **caractérisé en ce que** l'élément de retenue (6) est muni de dépressions d'encastrement (44) étudiées pour venir en correspondance d'accouplement avec les protubérances de mise en prise d'encastrement (37).

7. Dispositif selon l'une des revendications 1 à 6, **caractérisé en ce que** l'élément de retenue (6) est muni d'un ergot de butée (35) qui, dans la position d'immobilisation en position du dispositif, est en contact d'application contre l'arête de rive antérieure d'une barrette de rive (12).

8. Dispositif selon l'une des revendications 1 à 7, **caractérisé en ce que** l'élément de retenue (6) comporte une cage formant logement (22) comprenant des parois latérales (23, 24), dans lesquelles sont ménagées des ouvertures de mise en prise d'encastrement (25, 26) dans lesquelles des têtes d'emmanchement (27, 28) ménagées dans le boîtier (29) de la caméra (1) sont destinées à être insérées.

9. Dispositif selon la revendication 3 et la revendication 8, **caractérisé en ce que** la cage formant logement (22) est munie d'un ergot de butée (35) qui, dans la position d'immobilisation en position du dispositif, est en contact d'application contre une barrette de rive (12, 13, 14).
